# EUROPEAN PATENT SPECIFICATION

(11) **EP 1 932 753 B1**
(45) Date of publication and mention of the grant of the patent: **20.03.2019**
(21) Application number: 07425787.4
(22) Date of filing: 13.12.2007
(51) Int. Cl.: B62L 1/00, F16D 65/12, B60B 27/02

(54) **Hub group for bicycle wheel with disc brake**
Nabengruppe für ein Fahrrad mit Scheibenbremse
Groupe de moyeu pour roue de bicyclette avec frein à disque

(30) Priority: 13.12.2006 IT MI20062385
(43) Date of publication of application: 18.06.2008
(73) Proprietor: CAMPAGNOLO S.R.L., 36100 Vicenza (IT)
(72) Inventor: Meggiolan, Mario, 36051 Creazzo (Vicenza) (IT)
(74) Representative: Porta, Checcacci & Associati S.p.A

(56) References cited:
- DE-U1-202006 000 549
- US-A- 2 733 967
- US-A- 5 051 004
- US-A- 5 501 530
- US-A- 6 145 938
- US-B1- 6 336 531
- US-B1- 6 371 252

## Description

The present invention regards a hub group adapted to be employed in a bicycle wheel of the type with disc brake, as well as a wheel and a bicycle which incorporate one said hub group.

In bicycle wheels with disc brakes, the brake disc is normally mounted on the wheel hub on a disc seat having a form coupling profile, so as to make the disc integral in rotation with the hub and therefore with the wheel. A ring nut is then screwed on a thread formed on the hub, so as to hold the disc on the disc seat.

Known from US-A-6206144 is a hub in which the form coupling profile is a splined profile, with eight ribs and eight relatively wide grooves, and in which the thread is an outer thread formed on the ribs of the splined profile. This solution is not suitable for a standard splined profile, with a high number of grooves and relatively narrow ribs, since the thread would be formed by many extremely small portions and thus would have a very limited mechanical resistance; it is therefore necessary to provide suitable brake discs, equipped with a splined profile matching that of the hub, with a small number of grooves and ribs of relatively wide dimensions.

From US-A-6371252 a hub is also known in which the form coupling profile is a splined profile with a high number of ribs and relatively narrow grooves, and in which the thread is an inner thread, formed inside the tubular body of the hub at the splined profile. This solution permits the use of a standard splined profile, however it requires a rather complex working to make the inner thread. Moreover, the opposition of the splined profile outside the thread and inside the tubular body of the hub imposes a relatively large thickness of the tubular body itself, with consequent heaviness of the hub; once again, due to the presence of the inner thread and space necessary for screwing the ring nut, it is necessary to provide a tubular body of much greater than normal diameter in order to permit the housing of a bearing of adequate size.

DE 20 2006 000549 U1 discloses a hub group having the features of the preamble of claim 1.

The problem underlying the present invention is that of making a hub group on which a brake disc can be easily mounted without requiring technical solutions which weigh down the hub group or complicate its manufacture.

Consequently, the present invention regards a hub group according to claim 1; preferred characteristics are reported in the dependant claims. The present invention also regards a bicycle wheel and a bicycle which employs one said hub group.

More precisely, a hub group adapted to be employed in a bicycle wheel of the type having a disc brake comprises a tubular body extended axially along a rotation axis of the wheel between a first and a second end, the tubular body being provided in proximity to a second end thereof with a disc seat, having a form coupling profile for reception and locking in rotation of a brake disc, and a thread suitable to receive, via screwing, a ring nut which holds the disc on said disc seat.

Besides, the second rolling bearing has a greater axial extension and a lesser radial extension than the first rolling bearing.

Preferably, said thread is formed on a portion of the tubular body, axially separate from the disc seat and closer than the latter to the second end of the tubular body.

With this configuration, the thread and the disc seat are independent from each other, and can thus be chosen and sized in an optimal manner without mutual constraints.

The lesser radial extension of the second bearing, together with the position of the thread on an outer position of the tubular body which is axially separate from the disc seat, permits limiting the diameter of the disc seat.

Preferably, the thread is formed on an outer portion of the tubular body. The external positioning with respect to the tubular body of the hub permits both reducing the thickness of the tubular body itself and limiting its radial size. In a more complex and less preferred configuration, the thread could be provided inside the tubular body.

Preferably, the disc seat comprises ribs and threads having radial extensions comprised between a minimum bottom diameter and a maximum crest diameter, in which the thread has a minimum core diameter and a maximum outer diameter, where the bottom diameter of the disc seat is greater than or equal to the outer diameter of the thread. In this manner, the absence of interference is ensured in the mounting step of the disc on the hub group; in fact, the splined inner profile with which the hole of the disc must be provided, intended for the mounting on the disc seat, will have ribs which have minimum crest diameters which are greater than or equal to the bottom diameter of the disc seat, and thus do not interfere with the thread.

Preferably, the disc seat is axially extended between a first and a second end respectively oriented towards the first and second end of the tubular body, in which the thread is axially extended between a first and a second end respectively oriented towards the first and second end of the tubular body, where the second end of the disc coincides with the first end of the thread or is located between the first end of the thread and the first end of the tubular body with respect to the rotation body. In this manner, the disc seat and the thread are entirely axially separate, thus reducing the risk that there are tubular body portions of the hub group stressed both by the torsional stresses transmitted by the disc through the form coupling profile and by the tractive stresses transmitted by the ring nut through the thread.

In this manner, it was verified that the thread is not stressed by appreciable torsional stresses during braking. Therefore, deformations do not occur in the thread itself nor are there consequent risks of ring nut unscrewing.

In a preferred embodiment, the hub group comprises a circumferential groove between the disc seat and the thread. This configuration ensures the complete axial separation between the disc seat and the thread. Alternatively it is possible to have a not threaded portion between the disc seat and the threaded portion having the same outer diameter of the threaded portion.

The form coupling can be of different type, such as for example a polygonal or variously shaped profile. Preferably, the form coupling profile is a splined profile; said profile, in fact, is easy to obtain and permits both an easy mounting and an optimal transmission of the torsional stresses between the disc seat and the disc.

The axial positioning of the brake disc in the mounting on the disc seat can be defined by an outer shoulder, in a position close to the disc seat, on the opposite side with respect to the thread. Alternatively, the splined profile of the disc seat can have a variable diameter cross section, increasing in distance from the thread. The first solution is normally preferred, since the shoulder ensures that the brake disc has an axial position which is predetermined with precision, while the second is sometimes preferred since it ensures the absence of clearances between the disc seat and the brake disc.

The hub group can be provided without any brake disc, to be coupled to a brake disc by the user, or it can also comprise a brake disc comprising a central hole provided with a form coupling profile which is complementary to the form coupling profile of the disc seat, mounted on the disc seat integral in rotation with the tubular group, and a holding ring nut, screwed on the thread and pressing against the brake disc in an axial sense, towards the first end of the tubular body.

Analogously, the hub group can be provided without any spindle, to be coupled to a spindle by the user, or it can also comprise a spindle, rotatably supported inside the tubular body by means of a first and a second rolling bearing, respectively placed in proximity with the first and second ends of the tubular body.

Preferably, the second bearing is a double row ball bearing, more sliding and less subject to the accumulation of moisture and dirt than other types of bearings with low radial size, such as roller, barrel or needle bearings.

Preferably, each of the two ball rows of the second bearing run along an inner runway and an outer runway, made in respective inner and outer races of the second bearing, where one of the inner or outer runways on which one of the two ball rows runs has a greater width than the other runways of the second bearing. This ensures that the ball row which runs on a wider runway is stressed with much-reduced axial stresses (even zero), increasing the overall slidability of the bearing.

Preferably, the runway having greater width is one of the runways on which the ball row runs which is oriented towards the first end of the tubular body; this ensures greater stiffness and thus greater stability for the hub group.

Preferably, the runway having greater width is one of the two outer runways. This preference is due to the consideration that a wider runway reduces the contact area of the balls on the race, increasing the specific pressure; this phenomenon -potentially a source of problems- is more easily acceptable on the outer race, which has a greater circumferential extension than the inner race and therefore specific pressures with lower absolute value.

More preferably, the runway having greater width is the outer runway of the balls oriented towards the first end of the tubular body, so as to have both of the aforesaid advantages.

In order to reduce the thickness of the disc seat while maintaining enough strength to resist the braking torsional force, the disc seat preferably comprises ribs and grooves having radial extension comprised between 0,5 and 2 mm, and preferably between 0,5 and 1 mm.

Preferably, the number of the ribs, and the corresponding number of the grooves, is comprised between 10 and 60, wherein a high number is preferred since it is more suitable to resist high loads. More preferably the number is comprised between 20 and 60, and even more preferably between 40 and 60.

A preferred shape of the ribs and of the grooves is a symmetric trapezoidal shape, which is easy to obtain.

In a preferred embodiment the axially outermost portion of the second end of the tubular body of the hub group is not threaded, in this way the beginning of the thread is prevented
from damages during use.

Further characteristics and advantages will be evident from the following description of several embodiments thereof, made with reference to the attached drawings. In such drawings:
- Figure 1 is a half-section view along the axis of a hub group according to a first embodiment of the invention, for a front bicycle wheel;
- Figure 2 is an axonometric view of the tubular body of the hub group of Figure 1;
- Figure 3 is a side view of the tubular body of figure 2, along the direction III;
- Figure 4 is an enlarged scale view of a detail of figure 3;
- Figure 5 is a half-section view along the axis of a hub group according to a second embodiment of the invention, for a rear bicycle wheel;
- Figure 6 is a partial axonometric view of the tubular body of the hub group of figure 5, in which the thread is represented schematically and the part of the hub group which is found axially opposite the thread is not represented;
- Figure 7 is a half-section view along the axis of a hub group similar to the hub group of figure 5, provided with a brake disc and a ring nut;
- Figure 8 is a partially exploded view of the hub group of figure 7;
- Figure 9 is a side view of a bicycle which incorporates hub groups according to the invention;
- Figure 10 is an enlarged scale view of a portion of the hub group of figure 1;
- Figure 11 is a sectioned view of an end of an alternative embodiment of the tubular body of figure 2.

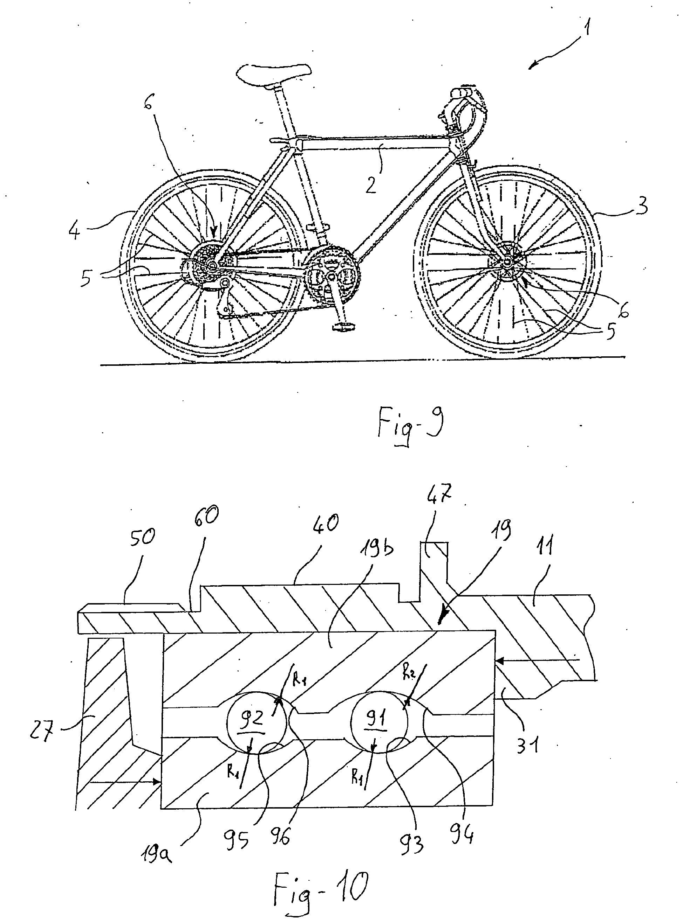

In figure 9, a bicycle 1 is shown in its entirety with a frame 2, a front wheel 3 and a rear wheel 4, each of which is of the type with spokes 5 and with disc brake 6.

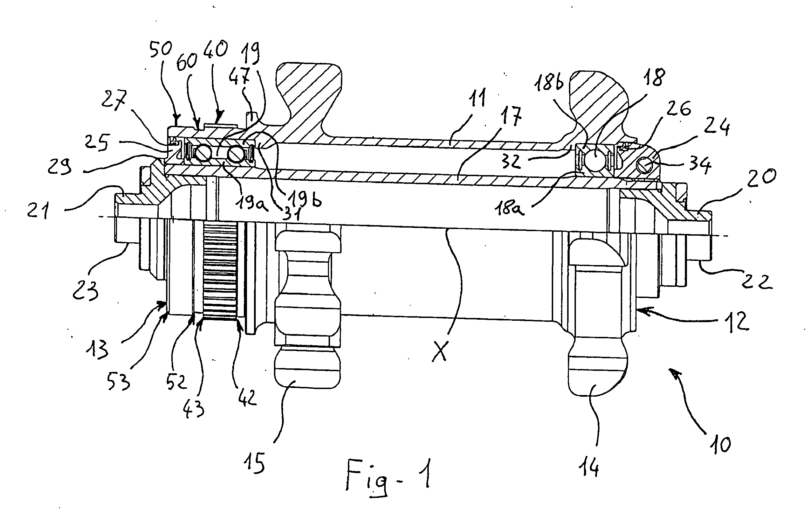

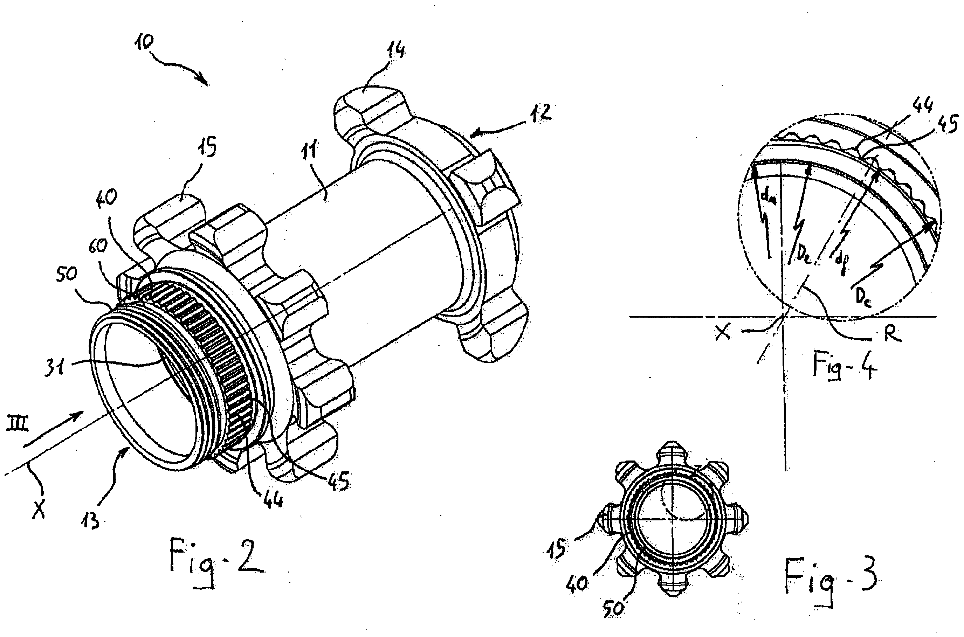

With reference in particular to figures 1-4, a hub group 10 for the front wheel 3 of the bicycle 1 comprises a tubular body 11, extended around an axis X, corresponding with the rotation axis of the wheel 3, from a first end 12 (on the right in figures 1 and 2) to a second end 13 (on the left in figures 1 and 2). The tubular body 11 is externally provided with two series of protuberances 14 and 15, not illustrated in detail since they are not the object of the present patent application, for the coupling to the spokes 5.

Inside the tubular body 11, a spindle 17 is provided, it too tubular, rotatably supported with respect to the tubular body 11 by means of a first and a second rolling bearing, respectively 18 and 19. The spindle 17 is then provided, in a *per se* conventional manner, with right and left terminal portions 20 and 21, firmly fixed to close the opposite ends of the spindle 17 and shaped so as to provide connection seats 22 and 23 to the frame 2 of the bicycle 1. The bearing 18 is of classic one ball row type, while the bearing 19 is of two ball row type, with balls of lesser diameter than those of the bearing 18.

Two annular closing caps 24 and 25 are provided between the spindle 17 and the tubular body 11, equipped with respective seals 26 and 27 towards the tubular body 11. The first annular cap 24 (on the right in figures 1 and 2) is screwed on the spindle 17 while the second annular cap 25 is mounted with force applied on the spindle 17 itself.

It is noted that the mounting of the spindle 17 in the tubular body 11 provides that the left annular cap 25 goes in abutment -towards the left, with reference to figure 1- against a projecting flange 29 of the left terminal portion 21 (in turn made integral with the spindle 17, for example by means of pasting) and receives in abutment -from the right- the inner race 19a of the second bearing 19. The outer race 19b of the same left bearing 19 goes instead in abutment -towards the right- against a shoulder 31 formed in the tubular body 11; the shoulder 31 therefore defines a housing seat of the left bearing 19 in the tubular body 11. The right bearing 18 on the other hand has its race 18b in abutment -towards the left- against a shoulder 32 formed in the tubular body 11 and its inner race 18a in abutment -towards the right-against the right annular cap 24; the shoulder 32 therefore defines a housing seat of the right bearing 18 in the tubular body 11. In this manner, it is understood that the right annular cap 24, which -as said- is screwed on the spindle 17, serves as register element of the bearing coupling between the spindle 17 and the annular body 11. The annular cap 24 is open ring shaped, and is tightened closed in the mounting on the spindle 17 by means of a transverse grub screw (only indicated schematically with 34), to prevent the loosening of the annular cap 24.

Outside the tubular body 11, a disc seat 40 is provided for reception and locking in rotation of a brake disc (not shown in figures 1 and 2). The disc seat 40 comprises an outer portion of the tubular body 11 comprised between a first right end 42 and a second left end 43, shaped according to a form coupling profile. With this term it is intended that the profile of the disc seat 40 has geometric characteristics such as to permit the transmission of a torsional movement between the tubular body 11 (on which the disc seat is made) and a brake disc mounted on said seat with its central hole provided with a matching profile; a form coupling profile can be for example a polygonal profile, or an altered circular profile (for example, levelled along a chord) or another profile. In particular, the form coupling profile of the disc seat 40 of the hub group 10 is a splined profile, with ribs 44 and grooves 45 oriented in a direction parallel to the X axis. The ribs 44 define a maximum crest diameter D_{c} of the splined profile, while the grooves 45 define a minimum bottom diameter dr of the splined diameter.

Close to the disc seat 40, near its right end 42, the tubular body 11 comprises an outer shoulder 47 which provides an axial abutment position for a brake disc mounted on the disc 40.

Still close to the disc seat 40, near its left end 43, a thread 50 is provided, formed on an outer portion of the tubular body 11 for the coupling with a threaded ring nut (not shown in figures 1-4) which holds a brake disc (it too not shown in figures 1-4) on the disc seat 40, against the outer shoulder 47. The thread 50 extends over the outside of the tubular body 11 between a right end 52 and a left end 53 and has an outer diameter Dₑ and a core diameter dₙ.

The disc seat 40 and the thread 50 are sized and positioned on the tubular body 11 so as to be axially separated, meaning that there exist positions along the X axis in which only the disc seat 40 is present and not the thread 50 and positions in which only the thread 50 is present and not the disc seat 40, while there are no positions in which both the disc seat 40 and the thread 50 are present; in other words, they are not even partially overlapped. More in particular, the following relations are valid in the hub group 10:
- the thread 50 is closer than the disc seat 40 to the second end 13 of the tubular body 11, i.e. the left end 53 of the thread 50 is closer than the left end 43 of the disc seat 40 to the left end 13 of the tubular body 11;
- the crest diameter D_{c} is greater than the outer diameter Dₑ;
- the bottom diameter d_{f} is greater than the core diameter dₙ;
- the bottom diameter d_{f} is greater than the outer diameter Dₑ;
- the second end 43 of the disc seat 40 is located between the first end 52 of the thread 50 and the first end 12 of the tubular body 11;
- the radial extension of the ribs 44 and grooves 45 between the bottom diameter d_{f} and the outer diameter Dₑ is comprised between 0,5 and 2 mm, and preferably between 0,5 and 1 mm.

Preferably the ribs 44 and grooves 45 have a trapezoidal shape which is symmetric with respect to a radial plane R (figure 4).

Further, the number of the ribs 44 is comprised between 10 and 60, more preferably between 20 and 60 and even more preferably between 40 and 60. The number of the grooves 45 is of course the same.

The tubular body 11 then comprises, at its exterior, a circumferential groove 60, between the disc seat 40 and the thread 50, or at least a not treaded portion.

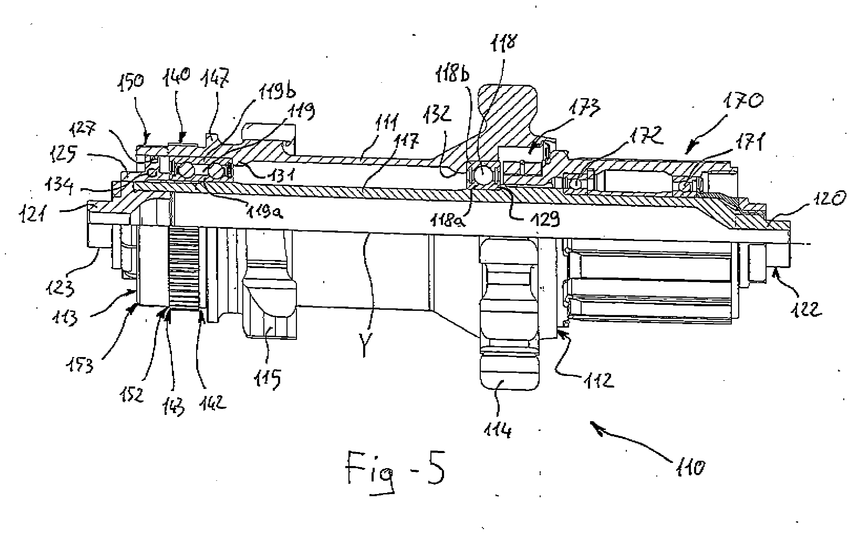

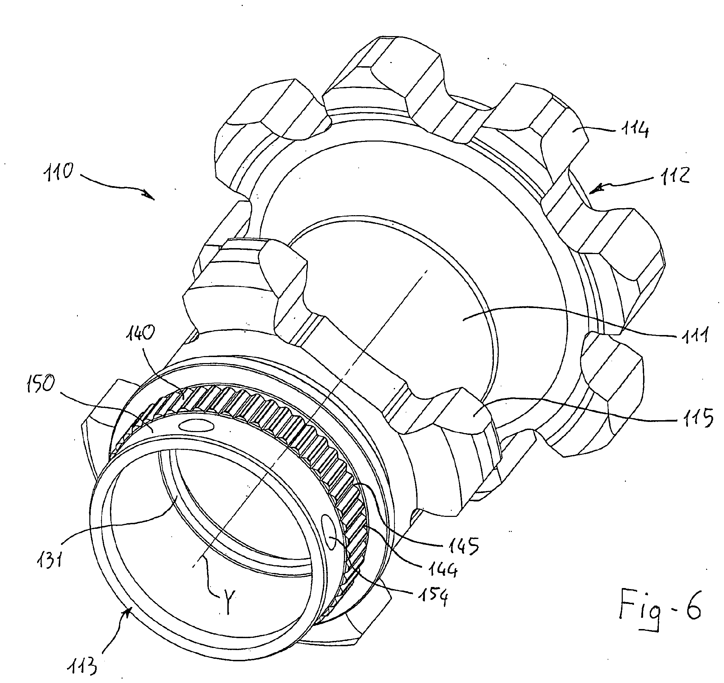

With reference in particular to figures 5 and 6, a hub group 110 for the rear wheel 4 of the bicycle 1 comprises a tubular body 111, extended around an axis Y, corresponding with the rotation axis of the wheel 4, from a first end 112 (on the right in figures 5 and 6) to a second end 113 (on the left in figures 5 and 6). The tubular body 111 is externally provided with two series of protuberances 114 and 115 for the coupling to the spokes 5, not illustrated in detail since they are not the object of the present patent application.

Inside the tubular body 111, a spindle 117 is provided, it too tubular, rotatably supported with respect to the tubular body 111 by means of a first and a second rolling bearing, respectively 118 and 119. The spindle 117 is then provided, in a *per se* conventional manner, with right and left terminal portions 120 and 121, firmly fixed to close the opposite ends of the spindle of the spindle 117 and shaped so as to provide connection seats 122 and 123 to the frame 2 of the bicycle 1. The bearing 118 is of classic type with one ball row, while the bearing 119 is of the type with two ball rows, with balls having smaller diameter than the balls of the bearing 118.

Different from the hub group 10, the hub group 110 then comprises a pinion-carrier group 170, rotatably mounted on the spindle 117 by means of rolling bearings 171 and 172, and coupled to the tubular body 111 by means of a freewheel connection 173, close to the first end 112 thereof. The pinion-carrier group 170 is *per se* conventional, and will not be described in detail below.

An annular closure cap 125 is then provided between the spindle 117 and the tubular body 111, equipped with a seal 127 towards the tubular body 111. The annular cap 125 is screwed on the spindle 117.

It is noted that the mounting of the spindle 117 in the tubular body 111 provides that the inner race 118a of the right bearing 118 goes in abutment -towards the right, with reference to figure 5- against a shoulder 129 formed on the spindle 117, while the outer race 118b of the same right bearing 118 receives a shoulder 132 in abutment, formed in the tubular body 111; the shoulder 132 therefore defines a housing seat of the right bearing 118 in the tubular body 111. The left bearing instead has its outer race 119b in abutment -towards the right- against a shoulder 131 formed in the tubular body 111 and its inner race 119a in abutment -towards the left- against the annular cap 125; the shoulder 131 therefore defines a housing seat of the left bearing 119 in tubular body 111. In this manner, it is understood that the annular cap 125, which -as said- is screwed on the pin 117, serves as register element of the bearing coupling between the spindle 117 and the annular body 111. The annular cap 125 is open ring shaped and in the mounting is tightened closed on the spindle 117 by means of a transverse grub screw (indicated only schematically with 134), in order to prevent the loosening of the annular cap 125.

A disc seat 140 is provided outside the tubular body 111 for reception and locking in rotation of a brake disc (not shown in figures 5 and 6). The disc seat 140 comprises an outer portion of the tubular body 111 comprised between a first right end 142 and a second left end 143, shaped according to a form coupling profile, equal to that of the disc seat 40 of the hub group 10. In particular, the form coupling profile of the disc seat 140 of the hub group 110 is a splined profile, with ribs 144 and grooves 145, oriented in a direction parallel to the Y axis. The ribs 144 define a maximum crest diameter D_{c} of the splined profile, while the grooves 145 define a minimum bottom diameter of the splined profile.

Close to the disc seat 140, in proximity to its right end 142, the tubular body 111 comprises an outer shoulder 147 which provides an axial abutment position for a brake disc mounted on the disc seat 140.

Still close to the disc seat 140, near its left end 143, a thread 150 is provided formed on an outer portion of the tubular body 111, for the coupling with a threaded ring nut (not shown in figures 5 and 6) which holds a brake disc (it too not shown in figures 5 and 6) on the disc seat 140 against the outer shoulder 147. The thread 150, equivalent to the thread 50 of the hub group 10, extends along the outside of the tubular group 111 between a right end 152 and a left end 153 and has an outer diameter Dₑ and a core diameter dₙ.

The disc seat 140 and the thread 150 are sized and positioned on the tubular body 111 so as to be axially separate, in the sense specified above. More in particular, the following relations are valid in the hub group 110:
- the thread 150 is closer than the disc seat 140 to the second end 113 of the tubular body 111, i.e. the left end 153 of the thread 150 is closer than the left end 143 of the disc seat 140 to the left end 113 of the tubular body 111;
- the crest diameter D_{c} is greater than the outer diameter Dₑ;
- the bottom diameter d_{f} is greater than the core diameter dₙ;
- the bottom diameter d_{f} is greater than the outer diameter Dₑ;
- the second end 143 of the disc seat 140 is located at the first end 152 of the thread 150, i.e. the disc seat 140 and the thread 150 are adjacent along the Y axis.

One or more holes 154 are made in the thread 150 for the access to the locking grub screw 134 of the annular cap 125.

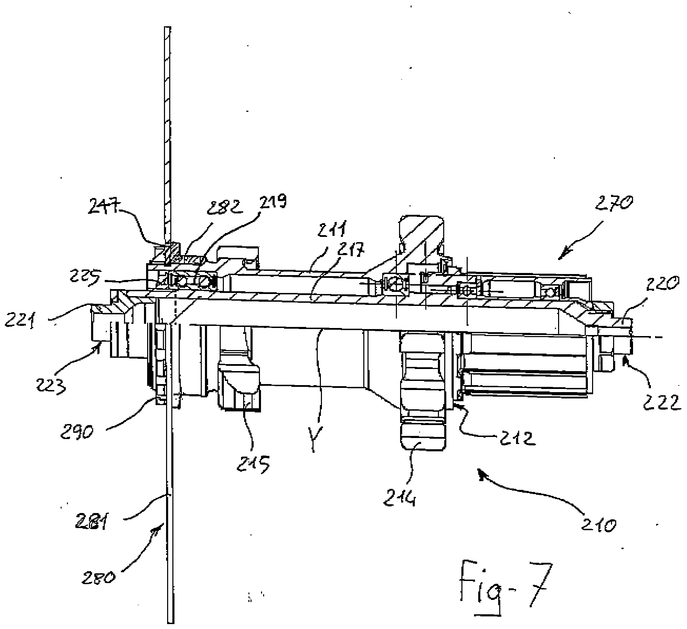

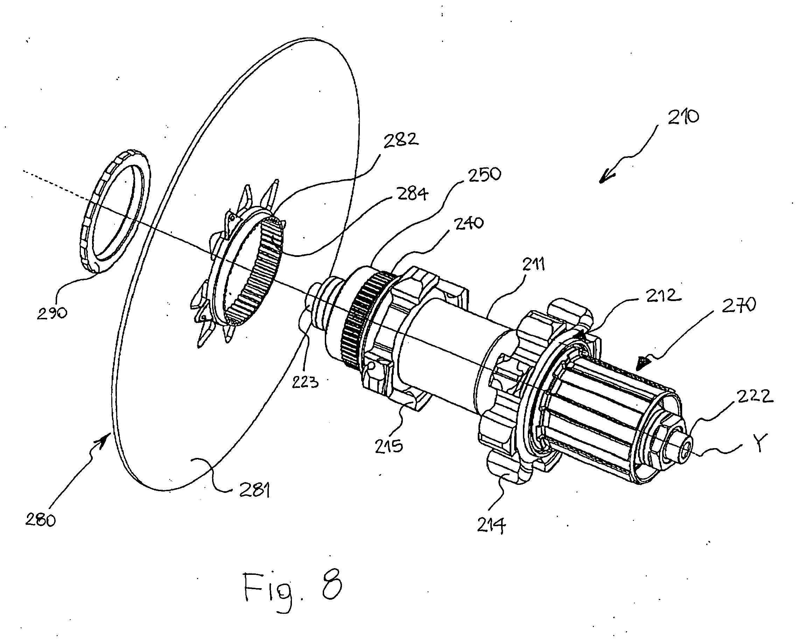

With reference in particular to figures 7 and 8, a hub group 210 is shown for the rear wheel 4 of the bicycle 1, substantially equal to the hub group 110, except for insignificant details of elements extraneous to the present invention, such as the pinion carrier group 270 and the annular cap 225. Therefore, this hub group 210 will not be described in detail; its elements, equivalent to the hub group 110, are marked by the same reference numbers plus 100.

The hub group 210 also comprises a brake disc 280 and a threaded ring nut 290. The brake disc 280 comprises a peripheral disc portion 281 which is firmly fixed to a central mounting ring 282; a central hole 284 is made in the mounting ring 282, provided with a splined profile matching the splined profile of the disc seat 240. The brake disc 280 is mounted with the mounting ring 282 on the disc seat 240, locked in rotation by the coupling between the splined profiles of the disc seat 240 and the central hole 284. The ring nut 290, screwed on the thread 250, axially pushes the brake disc 280 against the outer shoulder 247, thus ensuring that the brake disc 280 remains in engagement on the disc seat 240.

In figure 10, the second bearing 19 of the hub group 10 is illustrated in greater detail; the bearings 119 and 219 of the hub groups 110 and 210 are equivalent to the bearing 19, and thus that illustrated in figure 10 and described below also holds for the bearings 119 and 219.

As already stated, the bearing 19 has two ball rows, a first row 91 closer to the first end 12 of the tubular body 11 and a second row 92 closer to the second end 13 of the tubular body 11. The first ball row 91 runs along a first inner runway 93 made on the inner race 19a and on a first outer runway 94 made on the outer race 19b; the second ball row 92 runs along a second inner runway 95 made on the inner race 19a and a second outer runway 96 made on the outer race 19b.

The runways 93-96 have rounded, particularly semicircular section; the first outer runway 94 is wider than the other runways 93, 95 and 96, in particular it has a radius section R₂ greater than the radius R₁ of the other runways.

In this manner, the first ball row 91 substantially supports only radial loads and not also axial loads, which are left to the second ball row 92. This ensures a greater slidability of the bearing 19. The fact that the radial load is left to the second row 91, closer to the second end 13 of the tubular body 11, ensures a greater stiffness to the set. The choice, then, of having the runway 94 wider on the outer race 19b rather than on the inner race 19a is due to the consideration that a wider runway reduces the contact area of the balls of the runway, thus increasing the specific pressure, this phenomenon -potentially a source of problems- is more easily acceptable on the outer race 19b, which has a greater circumferential extension than the inner race 19a and therefore lower specific pressures.

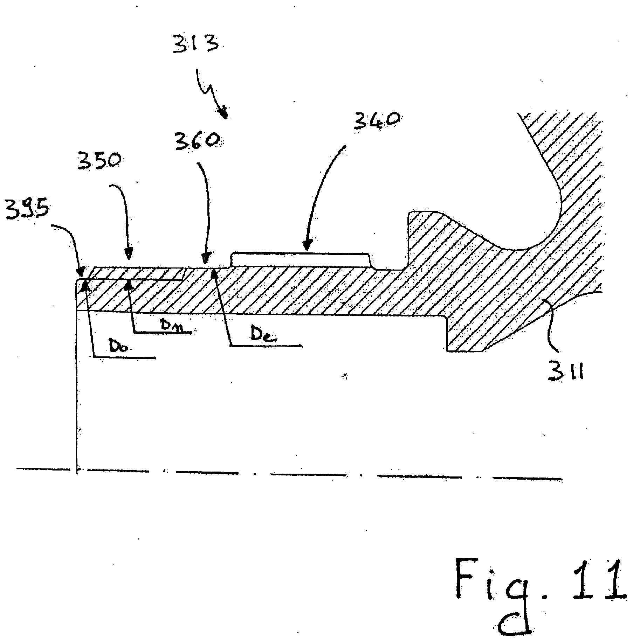

Figure 11 shows an alternative embodiment 311 of the tubular body that differs from the tubular body of figures 1-4 because its axially outermost portion 395 of the second end 313 is not threaded. In this way the beginning of the thread 350 is preserved from being damaged by lateral shocks. In the illustrated embodiment the axially outermost portion 395 has an outer diameter Dₒ that is lower or equal to the core diameter Dₘ of the thread 350 Between the thread 350 and the disc seat 340 is interposed a smooth portion 360 which can have the same outer diameter Dₑ e of the thread 350, as In figure 11, or can be a groove.

It is known that, in a hub group according to the invention, such as the hub groups 10, 110 and 210, the disc seat 40, 140, 240 does not interfere with the thread 50, 150, 250, improving the mechanical stress conditions in the material of the tubular body 11, 111, 211, which can therefore be designed with a relatively very small thickness.

Moreover, due to the axially separate position of the thread 50, 150, 250 with respect to the disc seat 40, 140, 240, the radial size is much reduced, such that -by possibly employing a reduced left bearing 19, 119, 219, for example with double ball row - it is possible to keep the diameter of the disc seat 40, 140, 240 very small, and thus keep that of the tubular body 11, 111, 211 very small, equivalent to that of a tubular body of a hub group for a wheel without disc brake.

Finally, the presence of the second bearing 19, 119, 219 inside the tubular body 11, 111, 211 at the disc seat 40, 140, 240 contributes to considerably stiffening the tubular body itself, precisely where the braking torque is applied, permitting risk-free mounting even of brake discs 280 with large diameters and great breaking power, such as those typical of so-called downhill bicycles, without requiring an excessive diameter of the tubular body 11, 111, 211.

## Claims

1. Hub group adapted to be employed in a wheel (3, 4) of a bicycle (1) of the type having disc brake (6), comprising a tubular body (11, 111, 211) extended axially along a rotation axis (X, Y) of the wheel (3, 4) between a first (12, 112, 212) and a second (13, 113, 213) end, the tubular body (11, 111, 211) being provided in proximity to a second end (13, 113, 213) thereof with a disc seat (40, 140, 240), having a form coupling profile for reception and locking in rotation of a brake disc (280), and with a thread (50, 150, 250), adapted to receive, via screwing, a ring nut (290) which holds the brake disc (280) on said disc seat (40, 140, 240), further comprising a spindle (17, 117, 217), rotatably supported inside the tubular body (11, 111, 211) by means of a first (18, 118, 218) and a second (19, 119, 219) rolling bearing, respectively placed in proximity to the first (12, 112, 212) and second (13, 113, 213) ends of the tubular body (11, 111, 211), **characterised in that** the second rolling bearing (19, 119, 219) has a greater axial and a lesser radial extension with respect to the first rolling bearing (18, 118, 218).

2. Hub group according to claim 1, wherein said thread (50, 150, 250, 350) is formed on a portion of the tubular body (11, 111, 211) which is axially separate from the disc seat (40, 140, 240) and closer than the latter to the second end (13, 113, 213) of the tubular body (11, 111, 211).

3. Hub group according to claim 1, wherein said thread (50, 150, 250) is formed on an outer portion of the tubular body (11, 111, 211).

4. Hub group according to claim 3, wherein the disc seat (40, 140, 240, 340) comprises ribs (44, 144, 244) and grooves (45, 145, 245) having radial extensions comprised between a minimum bottom diameter (d_{f}) and a maximum crest diameter (D_{c}), wherein the thread (50, 150, 250) has a minimum core diameter (dₙ) and a maximum outer diameter (Dₑ), where the crest diameter (D_{c}) of the disc seat (40, 140, 240) is greater than the outer diameter (Dₑ) of the thread (50, 150, 250, 350).

5. Hub group according to claim 4, wherein the bottom diameter (d_{f}) of the disc seat (40, 140, 240, 340) is greater than the core diameter (dₙ) of the thread (50, 150, 250, 350).

6. Hub group according to claim 5, wherein the bottom diameter (d_{f}) of the disc seat (40, 140, 240, 340) is greater than or equal to the outer diameter (Dₑ) of the thread (50, 150, 250, 350).

7. Hub group according to claim 1, wherein the disc seat (40, 140, 240, 340) is radially extended between a first (42, 142, 242) and a second (43, 143, 243) end oriented respectively towards the first (12, 112, 212) and second (13, 113, 213, 313) end of the tubular body (11, 111, 211), wherein the thread (50, 150, 250, 350) is axially extended between a first (52, 152, 252) and a second end (53, 153, 253) oriented respectively towards the first (12, 112, 212) and second (13, 113, 213, 313) end of the tubular body (11, 111, 211), wherein the second end (43) of the disc seat (40) is located between the first end (52) of the thread (50) and the first end (12) of the tubular body (11) with respect to the rotation axis (X).

8. Hub group according to claim 3, comprising a circumferential groove (60) between the disc seat (40) and the thread (50).

9. Hub group according to claim 3, comprising a not threaded portion (360) between the disc seat (340) and the threaded portion (350) having the same outer diameter (Dₑ) of the threaded portion (350).

10. Hub group according to claim 1, wherein the second end (143, 243) of the disc seat (140, 240) coincides with the first end (152, 252) of the thread (150, 250).

11. Hub group according to any one of the preceding claims, wherein the form coupling profile is a splined profile.

12. Hub group according to claim 1, wherein the tubular body (11, 111, 211) comprises an outer shoulder (47, 147, 247), in a position close to the disc seat (40, 140, 240, 340), on the opposite side with respect to the thread (50, 150, 250, 350).

13. Hub group according to claim 1, wherein the disc seat has a variable diameter cross section, increasing with distance from the thread.

14. Hub group according to any one of claims 3-13, comprising, inside the tubular body (11, 111, 211), a housing seat (32, 132, 232) of a rolling bearing (18, 118, 218), at least partially extended at the disc seat (40, 140, 240) and/or thread (50, 150, 250).

15. Hub group according to any one of the preceding claims, further comprising a brake disc (280), comprising a central hole (284) provided with a form coupling profile which is complementary to the form coupling profile of the disc seat (240), mounted on the disc seat (240) integral in rotation with the tubular body (211), and a threaded holding ring nut (290), screwed on the thread (250) and axially pressing against the brake disc (280), towards the first end (212) of the tubular body (211).

16. Hub group according to claim 15, wherein the brake disc (280) comprises a peripheral disc portion (281) firmly fixed to a central mounting ring (282), in which mounting ring (282) the central hole (284) is made.

17. Hub group according to claim 1, wherein the second bearing (19, 119, 219) is a double row ball bearing.

18. Hub group according to claim 1, wherein each of the two ball rows (91, 92) of the second bearing (19, 119, 219) run along an inner runway (93, 95) and on an outer runway (94, 96), made in respective inner (19a, 119a, 219a) and outer (19b, 119b, 219b) races of the second bearing (19, 119, 219), wherein one (94) of the inner or outer runways on which one (91) of the two ball rows runs has greater width than the other runways (93, 95, 96) of the second bearing (19, 119, 219).

19. Hub group according to claim 18, wherein the runway (94) having greater width is one of the runways (93, 94) on which the ball row (91) runs which is oriented towards the first end (12, 112, 212) of the tubular body (11, 111, 211).

20. Hub group according to claim 18, wherein the runway (94) having greater width is one of the two outer runways (94, 96).

21. Hub group according to claim 18, wherein the runway having greater width is the outer runway (94) of the ball row (91) oriented towards the first end (12, 112, 212) of the tubular body (11, 111, 211).

22. Hub group according to claim 1, wherein the disc seat (40, 140, 240) comprises ribs (44, 144, 244) and grooves (45, 145, 245) having radial extension comprised between 0,5 and 2 mm.

23. Hub group according to claim 1, wherein the disc seat (40, 140, 240) comprises a number of ribs (44, 144, 244) and a corresponding number of grooves (45, 145, 245) comprised between 10 and 60.

24. Hub group according to claim 23, wherein the number is comprised between 20 and 60.

25. Hub group according to claim 23, wherein the number is comprised between 40 and 60.

26. Hub group according to claim 1 wherein the disc seat (40, 140, 240) comprises ribs (44, 144, 244) and grooves (45, 145, 245) having a symmetric trapezoidal shape.

27. Hub group according to claim 1, wherein the axially outermost portion of the second end (13, 113, 213) of the tubular body (11, 111, 211) is not threaded.

28. Bicycle wheel comprising a hub group (10, 110, 210) according to any one of the preceding claims.

29. Bicycle comprising a hub group (10, 110, 210) according to any one of the claims 1-27.

## Patentansprüche

1. Naben-Gruppe, die zum Einsatz bei einem Laufrad (3, 4) eines Fahrrades (1) des Typs eingerichtet ist, der eine Scheibenbremse (6) hat, wobei sie einen röhrenförmigen Körper (11, 111, 211), der sich axial entlang einer Drehachse (X, Y) des Laufrades (3, 4) zwischen einem ersten Ende (12, 112, 212) und einem zweiten Ende (13, 113, 213) erstreckt, der röhrenförmige Körper (11, 111, 211) in der Nähe eines zweiten Endes (13, 113, 213) desselben mit einer Scheiben-Aufnahme (40, 140, 240), die ein formschlüssiges Profil zum Aufnehmen und Arretieren einer Bremsscheibe (280) bei Drehung aufweist, sowie mit einem Gewinde (50, 150, 250) versehen ist, das mittels Schrauben eine Ringmutter (290) aufnimmt, die die Bremsscheibe (280) an der Scheiben-Aufnahme (40, 140, 240) hält, wobei sie des Weiteren eine Spindel (17, 117, 217) umfasst, die über ein erstes Wälzlager (18, 118, 218) und ein zweites Wälzlager (19, 119, 219), die nahe an dem ersten Ende (12, 112, 212) bzw. dem zweiten Ende (13, 113, 213) des röhrenförmigen Körpers (11, 111, 211) positioniert sind, drehbar im Inneren des röhrenförmigen Körpers (11, 111, 211) gelagert ist, **dadurch gekennzeichnet, dass** das zweite Wälzlager (19, 119, 219) eine größere axiale und eine kleinere radiale Abmessung hat als das erste Wälzlager (18, 118, 218).

2. Naben-Gruppe nach Anspruch 1, wobei das Gewinde (50, 150, 250, 350) an einem Abschnitt des röhrenförmigen Körpers (11, 111, 211) ausgebildet ist, der axial von der Scheiben-Aufnahme (40, 140, 240) getrennt ist und näher an dem zweiten Ende (13,113, 213) des röhrenförmigen Körpers (11, 111, 211) angeordnet ist als diese.

3. Naben-Gruppe nach Anspruch 1, wobei das Gewinde (50, 150, 250) an einem äußeren Abschnitt des röhrenförmigen Körpers (11, 111, 211) ausgebildet ist.

4. Naben-Gruppe nach Anspruch 3, wobei die Scheiben-Aufnahme (40, 140, 240, 340) Rippen (44, 144, 244) und Nuten (45, 145, 245) umfasst, die radiale Abmessungen haben, die zwischen einem minimalen Boden-Durchmesser (d_{f}) und einem maximalen Spitzen-Durchmesser (D_{c}) eingeschlossen sind, und das Gewinde (50, 150, 250) einen minimalen Kerndurchmesser (dₙ) sowie einen maximalen Außendurchmesser (Dₑ) hat, und der Spitzen-Durchmesser (D_{c}) der Scheiben-Aufnahme (40, 140, 240) größer ist als der Außendurchmesser (Dₑ) des Gewindes (50, 150, 250, 350).

5. Naben-Gruppe nach Anspruch 4, wobei der Boden-Durchmesser (d_{f}) der Scheiben-Aufnahme (40, 140, 240, 340) größer ist als der Kern-Durchmesser (dₙ) des Gewindes (50, 150, 250, 350).

6. Naben-Gruppe nach Anspruch 5, wobei der Boden-Durchmesser (d_{f}) der Scheiben-Aufnahme (40, 140, 240, 340) genauso groß ist wie oder größer als der Außendurchmesser (Dₑ) des Gewindes (50, 150, 50, 350).

7. Naben-Gruppe nach Anspruch 1, wobei sich die Scheiben-Aufnahme (40, 140, 240, 340) radial zwischen einem ersten Ende (42, 142, 242) und einem zweiten Ende (43, 143, 243) erstreckt, die auf das erste Ende (12, 112, 212) bzw. das zweite Ende (13, 113, 213, 313) des röhrenförmigen Körpers (11, 111, 211) ausgerichtet sind, und sich das Gewinde (50, 150, 250, 350) axial zwischen einem ersten Ende (52, 152, 252) und einem zweiten Ende (53, 153, 253) erstreckt, die auf das erste Ende (12, 112, 212) bzw. das zweite Ende (13, 113, 213, 313) des röhrenförmigen Körpers (11, 111, 211) ausgerichtet sind, wobei sich das zweite Ende (43) der Scheiben-Aufnahme (40) zwischen dem ersten Ende (52) des Gewindes (50) und dem ersten Ende (12) des röhrenförmigen Körpers (11) in Bezug auf die Drehachse (X) befindet.

8. Naben-Gruppe nach Anspruch 3, die eine Umfangs-Nut (60) zwischen der Scheiben-Aufnahme (40) und dem Gewinde (50) umfasst.

9. Naben-Gruppe nach Anspruch 3, die einen Abschnitt (360) ohne Gewinde zwischen der Scheiben-Aufnahme (340) und dem Gewinde-Abschnitt (350) umfasst, der den gleichen Außendurchmesser (Dₑ) hat wie der Gewinde-Abschnitt (350).

10. Naben-Gruppe nach Anspruch 1, wobei das zweite Ende (143, 243) der Scheiben-Aufnahme (140, 240) deckungsgleich mit dem ersten Ende (152, 252) des Gewindes (150, 250) ist.

11. Naben-Gruppe nach einem der vorangehenden Ansprüche, wobei das formschlüssige Profil ein Keilprofil ist.

12. Naben-Gruppe nach Anspruch 1, wobei der röhrenförmige Körper (11, 111, 211) einen äußeren Absatz (47, 147, 247) an einer Position nahe an der Scheiben-Aufnahme (40, 140, 240, 340) an der dem Gewinde (50, 150, 250, 350) gegenüberliegenden Seite umfasst.

13. Naben-Gruppe nach Anspruch 1, wobei die Scheiben-Aufnahme einen Querschnitt mit veränderlichem Durchmesser hat, der mit Abstand zu dem Gewinde zunimmt.

14. Naben-Gruppe nach einem der Ansprüche 3-13, die im Inneren des röhrenförmigen Körpers (11, 111, 211) einen aufnehmenden Sitz (32, 132, 232) eines Wälzlagers (18, 118, 218) umfasst, der sich wenigstens teilweise an der Scheiben-Aufnahme (40, 140, 240) und/oder dem Gewinde (50, 150, 250) erstreckt.

15. Naben-Gruppe nach einem der vorangehenden Ansprüche, die des Weiteren eine Bremsscheibe (280), die ein Mittelloch (284) umfasst, das mit einem formschlüssigen Profil versehen ist, das komplementär zu dem formschlüssigen Profil der Scheiben-Aufnahme (240) ist, an der Scheiben-Aufnahme (240) integral mit dem röhrenförmigen Körper (211) rotierend angebracht ist, sowie eine mit Gewinde versehene Halte-Ringmutter (290) umfasst, die auf das Gewinde (250) aufgeschraubt ist und axial auf die Bremsscheibe (280) auf das erste Ende (212) des röhrenförmigen Körpers (211) zu drückt.

16. Naben-Gruppe nach Anspruch 15, wobei die Bremsscheibe (280) einen Umfangs-Scheiben-Abschnitt (281) umfasst, der fest an einem mittigen Anbringungs-Ring (282) angebracht ist, wobei in dem Anbringungs-Ring (282) das Mittelloch (284) ausgebildet ist.

17. Naben-Gruppe nach Anspruch 1, wobei das zweite Lager (19, 119, 219) ein zweireihiges Kugellager ist.

18. Naben-Gruppe nach Anspruch 1, wobei jede der zwei Kugelreihen (91, 92) des zweiten Lagers (19, 119, 219) entlang einer inneren Laufbahn (93, 95) und einer äußeren Laufbahn (94, 96) läuft, die in einer inneren Lauffläche (19a, 119a, 219a) bzw. einer äußeren Lauffläche (19b, 119b, 219b) des zweiten Lagers (19, 119, 219) ausgebildet sind, wobei eine (94) von den inneren oder den äußeren Laufbahnen, auf der eine (91) der Kugelreihen läuft, eine größere Breite hat als die anderen Laufbahnen (93, 95, 96) des zweiten Lagers (19, 119, 219).

19. Naben-Gruppe nach Anspruch 18, wobei die Laufbahn (94), die eine größere Breite hat, eine der Laufbahnen (93, 94) ist, auf der die Kugelreihe (91) läuft, die auf das erste Ende (12, 112, 212) des röhrenförmigen Körpers (11, 111, 211) zu ausgerichtet ist.

20. Naben-Gruppe nach Anspruch 18, wobei die Laufbahn (94), die eine größere Breite hat eine der zwei äußeren Laufbahnen (94, 96) ist.

21. Naben-Gruppe nach Anspruch 18, wobei die Laufbahn, die eine größere Breite hat, die äußere Laufbahn (94) der Kugelreihe (91) ist, die auf das erste Ende (12, 112, 212) des röhrenförmigen Körpers (11, 111, 211) zu ausgerichtet ist.

22. Naben-Gruppe nach Anspruch 1, wobei die Scheiben-Aufnahme (40, 140, 240) Rippen (44, 144, 244) und Nuten (45, 145, 245) umfasst, die eine radiale Abmessung haben, die zwischen 0,5 und 2 mm liegt.

23. Naben-Gruppe nach Anspruch 1, wobei die Scheiben-Aufnahme (40, 140, 240) eine Anzahl von Rippen (44, 144, 244) sowie eine entsprechende Anzahl von Nuten (45, 145, 245) umfasst, die zwischen 10 und 60 liegt.

24. Naben-Gruppe nach Anspruch 23, wobei die Anzahl zwischen 20 und 60 liegt.

25. Naben-Gruppe nach Anspruch 23, wobei die Anzahl zwischen 40 und 60 liegt.

26. Naben-Gruppe nach Anspruch 1, wobei die Scheiben-Aufnahme (40, 140, 240) Rippen (44, 144, 244) und Nuten (45, 145, 245) umfasst, die eine symmetrische Trapezform haben.

27. Naben-Gruppe nach Anspruch 1, wobei der axial am weitesten außen liegende Abschnitt des zweiten Endes (13, 113, 213) des röhrenförmigen Körpers (11, 111, 211) nicht mit Gewinde versehen ist.

28. Fahrrad-Laufrad, das eine Naben-Gruppe (10, 110, 210) nach einem der vorangehenden Ansprüche umfasst.

29. Fahrrad, das eine Naben-Gruppe (10, 110, 210) nach einem der Ansprüche 1-27 umfasst.

## Revendications

1. Groupe de moyeu conçu pour être employé dans une roue (3, 4) d'une bicyclette (1) du type à frein à disque (6), comprenant un corps tubulaire (11, 111, 211) s'étendant axialement le long d'un axe de rotation (X, Y) de la roue (3, 4) entre une première extrémité (12, 112, 212) et une deuxième extrémité (13, 113, 213), le corps tubulaire (11, 111, 211) étant pourvu à proximité d'une deuxième extrémité (13, 113, 213) de celui-ci d'un siège de disque (40, 140, 240), ayant un profil d'accouplement de forme pour une réception et un verrouillage en rotation d'un disque de frein (280), et d'un filetage (50, 150, 250), conçu pour recevoir, par vissage, un écrou (290) lequel maintient le disque de frein (280) sur ledit siège de disque (40, 140, 240), comprenant en outre une broche (17, 117, 217), supportée avec possibilité de rotation à l'intérieur du corps tubulaire (11, 111, 211) par un premier palier de roulement (18, 118, 218) et un deuxième palier de roulement (19, 119, 219), respectivement placés à proximité de la première extrémité (12, 112, 212) et de la deuxième extrémité (13, 113, 213) du corps tubulaire (11, 111, 211), **caractérisé en ce que** le deuxième palier de roulement (19, 119, 219) présente une plus grande étendue axiale et une plus petite étendue radiale par rapport au premier palier de roulement (18, 118, 218).

2. Groupe de moyeu selon la revendication 1, dans lequel ledit filetage (50, 150, 250, 350) est formé sur une partie du corps tubulaire (11, 111, 211) qui est axialement séparée du siège de disque (40, 140, 240) et est plus proche que ce dernier de la deuxième extrémité (13, 113, 213) du corps tubulaire (11, 111, 211).

3. Groupe de moyeu selon la revendication 1, dans lequel ledit filetage (50, 150, 250) est formé sur une partie extérieure du corps tubulaire (11, 111, 211).

4. Groupe de moyeu selon la revendication 3, dans lequel le siège de disque (40, 140, 240, 340) comprend des nervures (44, 144, 244) et des rainures (45, 145, 245) ayant des étendues radiales comprises entre un diamètre de fond minimal (df) et un diamètre de crête maximal (D_{c}), où le filetage (50, 150, 250) a un diamètre de noyau minimal (dₙ) et un diamètre extérieur maximal (Dₑ), où le diamètre de crête (D_{c}) du siège de disque (40, 140, 240) est supérieur au diamètre extérieur (Dₑ) du filetage (50, 150, 250, 350).

5. Groupe de moyeu selon la revendication 4, dans lequel le diamètre de fond (df) du siège de disque (40, 140, 240, 340) est supérieur au diamètre de noyau (dₙ) du filetage (50, 150, 250, 350).

6. Groupe de moyeu selon la revendication 5, dans lequel le diamètre de fond (df) du siège de disque (40, 140, 240, 340) est supérieur ou égal au diamètre extérieur (Dₑ) du filetage (50, 150, 250, 350).

7. Groupe de moyeu selon la revendication 1, dans lequel le siège de disque (40, 140, 240, 340) s'étend radialement entre une première extrémité (42, 142, 242) et une deuxième extrémité (43, 143, 243) orientées respectivement vers la première extrémité (12, 112, 212) et la deuxième extrémité (13, 113, 213, 313) du corps tubulaire (11, 111, 211), où le filetage (50, 150, 250, 350) s'étend axialement entre une première extrémité (52, 152, 252) et une deuxième extrémité (53, 153, 253) orientées respectivement vers la première extrémité (12, 112, 212) et la deuxième extrémité (13, 113, 213, 313) du corps tubulaire (11, 111, 211), où la deuxième extrémité (43) du siège de disque (40) est située entre la première extrémité (52) du filetage (50) et la première extrémité (12) du corps tubulaire (11) par rapport à l'axe de rotation (X).

8. Groupe de moyeu selon la revendication 3, comprenant une rainure circonférentielle (60) entre le siège de disque (40) et le filetage (50).

9. Groupe de moyeu selon la revendication 3, comprenant une partie non filetée (360) entre le siège de disque (340) et la partie filetée (350) ayant le même diamètre extérieur (Dₑ) que la partie filetée (350).

10. Groupe de moyeu selon la revendication 1, dans lequel la deuxième extrémité (143, 243) du siège de disque (140, 240) coïncide avec la première extrémité (152, 252) du filetage (150, 250).

11. Groupe de moyeu selon l'une quelconque des revendications précédentes, dans lequel le profil d'accouplement de forme est un profil cannelé.

12. Groupe de moyeu selon la revendication 1, dans lequel le corps tubulaire (11, 111, 211) comprend un épaulement extérieur (47, 147, 247), à une position proche du siège de disque (40, 140, 240, 340), sur le côté opposé par rapport au filetage (50, 150, 250, 350).

13. Groupe de moyeu selon la revendication 1, dans lequel le siège de disque présente une section transversale à diamètre variable, qui augmente en s'écartant du filetage.

14. Groupe de moyeu selon l'une quelconque des revendications 3 à 13, comprenant, à l'intérieur du corps tubulaire (11, 111, 211), un siège de logement (32, 132, 232) d'un palier de roulement (18, 118, 218), s'étendant au moins partiellement au niveau du siège de disque (40, 140, 240) et/ou du filetage (50, 150, 250).

15. Groupe de moyeu selon l'une quelconque des revendications précédentes, comprenant en outre un disque de frein (280), comprenant un trou central (284) doté d'un profil d'accouplement de forme qui est complémentaire du profil d'accouplement de forme du siège de disque (240), monté sur le siège de disque (240) en étant solidaire en rotation avec le corps tubulaire (211), et un écrou de maintien taraudé (290), vissé sur le filetage (250) et appuyant axialement contre le disque de frein (280), en direction de la première extrémité (212) du corps tubulaire (211).

16. Groupe de moyeu selon la revendication 15, dans lequel le disque de frein (280) comprend une partie de disque périphérique (281) fermement fixée à une bague de montage central (282), dans laquelle bague de montage (282) est réalisé le trou central (284).

17. Groupe de moyeu selon la revendication 1, dans lequel le deuxième palier (19, 119, 219) est un palier à billes à double rangée.

18. Groupe de moyeu selon la revendication 1, dans lequel chacune des deux rangées de billes (91, 92) du deuxième palier (19, 119, 219) court le long d'un chemin de roulement intérieur (93, 95) et sur un chemin de roulement extérieur (94, 96), ménagés selon des courses intérieure (19a, 119a, 219a) et extérieure (19b, 119b, 219b) respectives du deuxième palier (19, 119, 219), où l'un (94) des chemins de roulement intérieur ou extérieur sur lequel court l'une (91) des deux rangées de billes présente une largeur supérieure aux autres chemins de roulement (93, 95, 96) du deuxième palier (19, 119, 219).

19. Groupe de moyeu selon la revendication 18, dans lequel le chemin de roulement (94) ayant une largeur supérieure est l'un des chemins de roulement (93, 94) sur lequel court la rangée de billes (91) qui est orientée vers la première extrémité (12, 112, 212) du corps tubulaire (11, 111, 211).

20. Groupe de moyeu selon la revendication 18, dans lequel le chemin de roulement (94) ayant une largeur supérieure est l'un des deux chemins de roulement extérieurs (94, 96).

21. Groupe de moyeu selon la revendication 18, dans lequel le chemin de roulement ayant une largeur supérieure est le chemin de roulement extérieur (94) de la rangée de billes (91) orientée vers la première extrémité (12, 112, 212) du corps tubulaire (11, 111, 211).

22. Groupe de moyeu selon la revendication 1, dans lequel le siège de disque (40, 140, 240) comprend des nervures (44, 144, 244) et des rainures (45, 145, 245) ayant une étendue radiale comprise entre 0,5 mm et 2 mm.

23. Groupe de moyeu selon la revendication 1, dans lequel le siège de disque (40, 140, 240) comprend un nombre de nervures (44, 144, 244) et un nombre correspondant de rainures (45, 145, 245) compris entre 10 et 60.

24. Groupe de moyeu selon la revendication 23, dans lequel le nombre est compris entre 20 et 60.

25. Groupe de moyeu selon la revendication 23, dans lequel le nombre est compris entre 40 et 60.

26. Groupe de moyeu selon la revendication 1, dans lequel le siège de disque (40, 140, 240) comprend des nervures (44, 144, 244) et des rainures (45, 145, 245) ayant une forme trapézoïdale symétrique.

27. Groupe de moyeu selon la revendication 1, dans lequel la partie axialement la plus à l'extérieur de la deuxième extrémité (13, 113, 213) du corps tubulaire (11, 111, 211) n'est pas filetée.

28. Roue de bicyclette comprenant un groupe de moyeu (10, 110, 210) selon l'une quelconque des revendications précédentes.

29. Bicyclette comprenant un groupe de moyeu (10, 110, 210) selon l'une quelconque des revendications 1 à 27.
